# EUROPEAN PATENT SPECIFICATION

(11) **EP 2 011 693 B1**
(45) Date of publication and mention of the grant of the patent: **03.11.2010**
(21) Application number: 07111649.5
(22) Date of filing: 03.07.2007
(51) Int. Cl.: B60R 9/045

(54) **Roof rail, mounting component and vehicle**
Dachreling, Montagekomponente und Fahrzeug
Rail de toit, composant de montage et véhicule

(43) Date of publication of application: 07.01.2009
(73) Proprietor: Ford Global Technologies, LLC, Dearborn, MI 48126 (US)
(72) Inventor: Ljungholm, Bengt, 44291 Romelilla (SE)
(74) Representative: VALEA AB

(56) References cited:
- EP-A- 1 153 798
- EP-A- 1 199 220
- EP-A- 1 442 939
- WO-A-2006/130078
- DE-A1- 10 138 028
- US-A- 4 295 587
- US-A- 5 499 762

## Description

### TECHNICAL FIELD

The present invention concerns a roof rail and a roof load bar for a vehicle, whereby roof rails are arranged to bear at least part of the weight of roof load bars and its load when the roof rails are arranged on the roof of a vehicle and the roof load bars are attached to the roof rails. The present invention also concerns a mounting component for use with such a roof rail and a roof load bar comprising such a mounting component. The present invention further concerns a vehicle comprising such a roof rail, roof load bar or mounting component.

### BACKGROUND OF THE INVENTION

Roof rails may be used to transport large and/or bulky items, such as bicycles, skis, canoes, luggage and other equipment or containers, on the roof of a vehicle. Many vehicles comprise two roof rails that extend in the longitudinal direction of the vehicle. Roof load bars are clamped to the roof rails and objects to be transported by the vehicle are then secured to the roof load bars. Roof load bars often comprise means, such as clamps, for rigidly securing the roof load bar to the roof rails so that it will not move during transport.

The abstract of European patent application no. EP 1153798 discloses a vehicle roof that has rails along its longitudinal edges. A roof load bar may be fastened to the rails via support feet. Each roof rail has a constriction for engagement with a tensioning clamp of a support foot. The constriction comprises vertical ribs to limit the horizontal movement of the clamp. The weight of the roof load bar is borne by the upper surface of the roof rails.

Conventional roof rails generally extend along the roof edges in the longitudinal direction of the vehicle on which they are provided. Conventional roof rails are usually located at a distance of about a couple of centimeters from the area where the roof of the vehicle is joined to the side panels of the vehicle. These types of roof rails are generally provided with holes, notches, indentations or the like for clamping the roof load bars onto the roof rails. In this way, the roof load bars are clamped onto the roof rails in fixed positions. Furthermore, these types of roof rails are provided with a strut that bears the weight of the roof rails and consequently of the roof load bars and any load attached thereto. For example, such struts are provided in an area above the A- and C-pillars of a vehicle. By means of these struts, the roof load bars are also arranged in a fixed position on the roof rails.

It is however desirable to allow roof load bars to be positioned in any location along the roof rails of a vehicle. It is also desirable to provide such free positioning of the roof load bars onto a type of roof rail, which is partially depressed into the area where the roof is joined to the side panels of the vehicle.

WO 2006/130078 concerns a load carrier foot for fastening a load carrier to a roof rail of a vehicle, comprising two clamping jaws arranged at an initial distance from each other which is larger than the width of the roof rails. The load carrier foot may be located essential freely on the roof rail with the clamping jaws arranged on an opposite inside and outside of the roof rail, and a clamping means is arranged to move the clamping jaws against each other in such way that the load carrier foot is firmly clamped at the roof rail. The clamping jaws are elastic relative to each other and the clamping jaws have a gripping surface adapted to the roof rail.

### SUMMARY OF THE INVENTION

It is thus an object of the present invention to provide a new type of roof rail and roof load bar which improve friction characteristics and which allow free positioning of roof load bars in the longitudinal direction of the vehicle.

This object is achieved by a roof rail that is arranged to bear at least part of the weight of a roof load bar and its load or an object that is to be transported on the roof of the vehicle, whereby at least one roof rail is arranged to be releasably or non-releasably attached to the roof of a vehicle and whereby at least one roof load bar is arranged to be releasably or non-releasably attached to the at least one roof rail. The roof rail includes a substantially V-shaped groove that is arranged to receive a corresponding protrusion, such as a wedge-shaped protrusion, on a roof load bar, whereby at least one surface of the substantially V-shaped groove constitutes said load-bearing surface. Alternatively, the roof rail includes a substantially V-shaped protrusion, such as a wedge-shaped protrusion, that is arranged to be inserted into a corresponding substantially V-shaped groove on a roof load bar. The substantially V-shaped groove gives rise to a frictional force that will act in the longitudinal direction of the vehicle.

At least one side of the substantially V-shaped groove or protrusion, i.e. a side constituting at least part of the V-shape is arranged to be vertically inclined to the vehicle's horizontal plane when the roof rail is mounted on a vehicle, i.e. the plane defined by the contact points of the vehicle's tyres with an underlying surface, when the vehicle is standing on substantially flat ground. Said at least one side of the substantially V-shaped groove or protrusion is for example vertically inclined at an angle of 1 - 45° to the vehicle's horizontal plane when the roof rail is mounted on a vehicle.

According to an embodiment of the invention the substantially V-shaped groove may be rounded, it may for example have the shape of part of an ellipse, or have any other shape which gives rise to at least two contact points or surfaces between the surface(s) of a protrusion and the surfaces of the substantially V-shaped groove when a roof load bar is attached to the roof rail. It should be noted that a protrusion need not necessarily have a V-shaped profile. The protrusion may for example have a spherical or elliptical surface and may be of any shape as long as at least two contact points or surfaces are obtained between the surface(s) of the protrusion and the surfaces of the substantially V-shaped groove when a roof load bar or a mounting component is attached to the roof rail.

According to an embodiment of the invention the roof rail has a longitudinal extension, L, and a transverse extension, T, that extends between a first side wall and a second side wall. The roof rail includes a substantially V-shaped groove in the form of a recessed undercut in the first side wall. The recessed undercut comprises a load-bearing surface that at least partially extends within the boundaries of the maximum transverse extension, Tₘₐₓ, of the part of the roof rail overlapping the recessed undercut when the roof rail is mounted on a vehicle. According to an embodiment of the invention the recessed undercut is arranged in the side wall that is to be located closest to the centre of the roof of the vehicle, i.e. the inner side wall.

According to a further embodiment of the invention the roof rail comprises receiving means to receive a leg of a clamp that clamps the roof load bar to the roof rail. The receiving means may be located on the side wall that is to be located furthest from the centre of the roof of the vehicle, i.e. the outer side wall. Alternatively the receiving means may be located on the side wall that is to be located closest to the centre of the roof of the vehicle, i.e. the inner side wall. According to another embodiment of the invention one side of the substantially V-shaped groove, which constitutes a load-bearing surface is located substantially at the same height on the roof rail as the receiving means. This enables a roof rail to be made as compact as possible.

It should be noted that the expression "roof load bar" is intended to mean any framework, stand, grating or container that is secured to the roof of a vehicle, on, or in which articles may be placed or to which articles may be attached. The expression "roof load bar" as used in this document therefore includes roof boxes.

According to a further embodiment of the invention said at least one side of the substantially V-shaped groove or protrusion extends along at least part of the length of the roof rail or preferably along substantially the entire length of the roof rail, whereby the latter option enables a roof load bar or object to be attached at any position along the roof rail.

According to an embodiment of the invention the V-shaped groove or protrusion extends in a curved/non-linear manner along the length and/or breadth of said roof rail.

In all embodiments of the invention a substantially V-shaped protrusion is adapted for partial or complete insertion into a substantially V-shaped groove.

According to another embodiment of the invention the roof rail is arranged to be located in a channel/depression in the area where the roof of the vehicle is joined to the side panels of the vehicle, i.e. within 10 cm of the side edge of the roof, when mounted in a vehicle.

The present invention also concerns a mounting component for attaching a load, such as a roof load bar or any other object, such as a bicycle or a pair of skis, directly to a roof rail according to any of the embodiments of the invention. The mounting component comprises a first leg having a distal end comprising a substantially V-shaped protrusion, such as a wedge-shaped protrusion, or a substantially V-shaped groove having a lower downwardly-facing surface and an upper upwardly-facing locking surface when mounted on a roof rail, whereby the downwardly- and upwardly-facing surfaces minimize or prevent the movement of the load and whereby said protrusion or said groove is adapted to mate with a corresponding substantially V-shaped groove or substantially V-shaped protrusion of said roof rail. The substantially V-shaped protrusion will have at least two surfaces in contact with two surfaces of a substantially V-shaped groove when a roof load bar is attached to the roof rail, thereby increasing the contact surface area between the protrusion and the groove. At least one of these surfaces may be arranged to have a high coefficient of friction, by lining the at least one surface with a material such as rubber, or by increasing its roughness for example, to allow loads to be borne on the roof rail without sliding in the longitudinal direction of the vehicle when the vehicle is moving.

According to an embodiment of the invention the mounting component comprises a second leg that is arranged to clamp the mounting component onto the roof rail.

According to another embodiment of the invention the mounting component comprises tightening means, such as a threaded member, or clamping means for adjusting the distance between the first and second legs to tighten the mounting component to the roof rail.

According to an embodiment of the invention the mounting component comprises means to attach itself to an object such as a roof load bar or any other object that is to be transported on the roof rail of a vehicle.

The present invention also concerns a roof load bar, a roof box or roof rack for a vehicle for use with a roof rail according to any of the embodiments of the invention, whereby the roof load bar comprises a mounting component according to any of the embodiments of the invention. According to an embodiment of the invention the mounting component is integrally formed with the roof load bar or merely attached thereto.

The present invention also concerns a vehicle, such as a passenger car, especially an estate car, which comprises a roof rail, a mounting component or a roof load bar according to any of the embodiments of the invention. The roof rail may be mounted on the roof of the vehicle, or integrally formed with part of the vehicle, such as its roof or door frame.

### BRIEF DESCRIPTION OF THE DRAWINGS

The present invention will hereinafter be further explained by means of non-limiting examples with reference to the appended mostly schematic figures where;
- Figure 1: shows a vehicle comprising a roof rail according to an embodiment of the invention,
- Figure 2: shows the roof of a vehicle on which a roof load bar according to an embodiment of the invention has been mounted,
- Figure 3: shows the contact surfaces of a roof rail and a roof load bar according to first and second embodiments of the invention,
- Figure 4: shows how a roof load bar or a mounting component may be attached to a roof rail according to an embodiment of the invention, and
- Figure 5: shows a component for attaching an object to a roof rail according to an embodiment of the invention.

It should be noted that the drawings have not been drawn to scale and that the dimensions of certain features have been exaggerated for the sake of clarity.

### DETAILED DESCRIPTION OF EMBODIMENTS

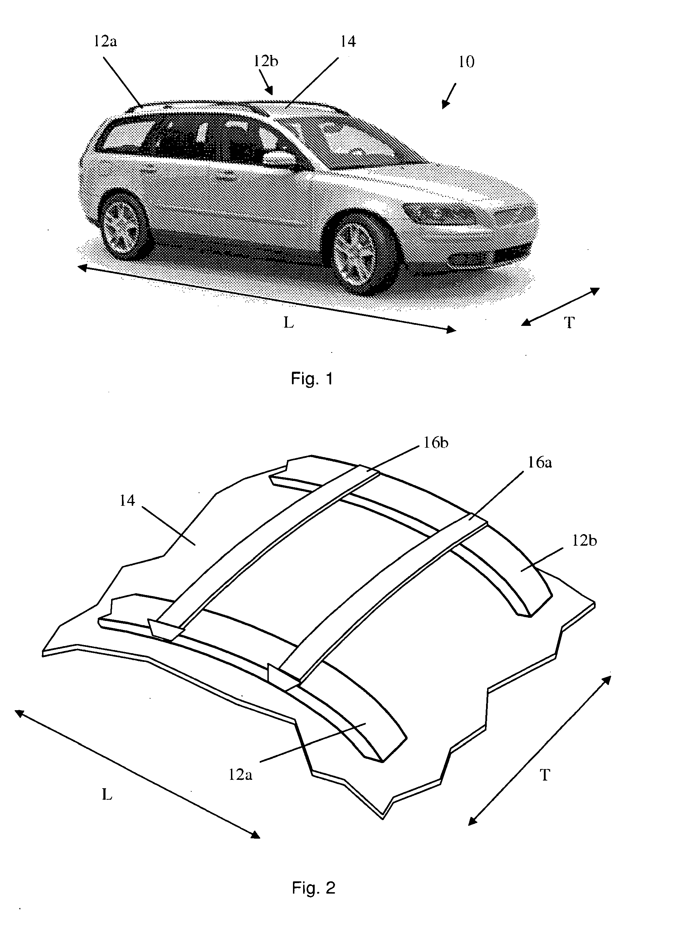

Figure 1 shows a vehicle 10 comprising two roof rails 12 which are integrated with the roof 14 of the vehicle 10. Each roof rail 12 extends in the longitudinal direction, L, of the vehicle and is located on a longitudinal side of the roof 14 of the vehicle 10. A roof rail 12 may however be placed anywhere on the roof 14 of the vehicle and it need not necessarily extend in a substantially straight line. Each roof rail 12 may be a multipart construction, but preferably consists of one piece, such as a single section of a metal tube. The roof rails 12 are fastened on top of the roof 14 of the vehicle 10, or in a channel in the roof 14 of the vehicle, at their front and rear downwardly-sloping regions by means of gluing, soldering, screwing or welding for example. Alternatively the roof rails 12 are fastened to vehicle pillars, such as the A- and C-pillar of the vehicle 10. It should be noted that the roof rails 12 need not necessarily be located at a distance from the top of the roof 14 of the vehicle 10 as exemplified in figure 1; the roof rails 12 may namely be placed immediately adjacent to the top of the roof 14, i.e. without a gap between the roof rails 12 and the top of the roof 14 in a channel/depression in the area where the roof is joined to the side panels of the vehicle.

Figure 2 shows the roof 14 of a vehicle on which two roof rails 12a, 12b extend in the longitudinal direction L of the vehicle; one on each of the longitudinal sides of the roof 14. Two detachable transverse roof load bars 16a, 16b are attached to the roof rails 12a, 12b.

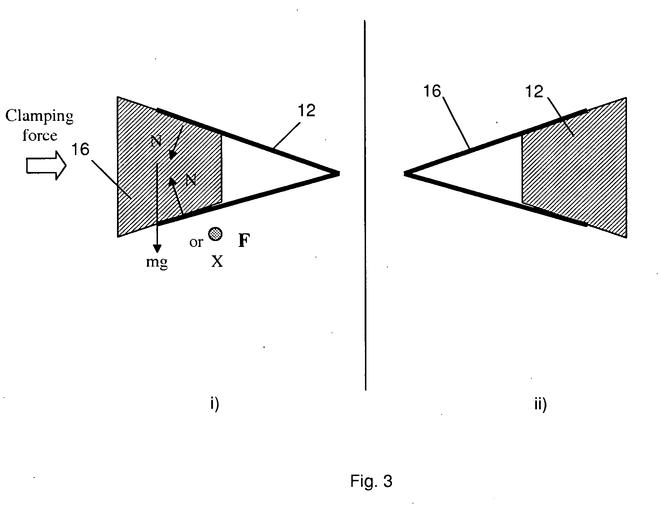

Figure 3 i) shows a first embodiment of the invention in which a roof rail 12 is provided with substantially V-shaped groove that is arranged to mate with a corresponding substantially V-shaped protrusion on the leg of a roof load bar 16. Figure 3 ii) shows a second embodiment of the invention in which a roof rail 12 is provided with substantially V-shaped protrusion that is arranged to mate with a corresponding substantially V-shaped groove on the leg of a roof load bar 16. A normal force, N, is always directed perpendicular to the plane of contact between the roof rail 12 and the roof load bar 16.

By providing a roof rail 12 or a roof load bar 16 with a substantially V-shaped groove or protrusion, a frictional force, F, whose magnitude is proportional to the normal force, N, will act in the longitudinal direction of the vehicle (i.e. into or out of the plane of the paper depending on whether the vehicle is accelerating or decelerating) as indicated in figure 3 i) and 3 ii). The frictional force, F, will minimize or prevents the movement of the roof load bar 16 and its load in the longitudinal direction of the vehicle during transport. It should be noted that the sides constituting the V-shape of the groove or the protrusion need not necessarily be planar; they may be curved. The V-shaped protrusion may form a substantially conical shape comprising a plurality of sides that are arranged to mate with a correspondingly formed conical groove. Furthermore, the protrusion may have any shape as long as at least two contact points or surfaces are obtained between the surface(s) of the protrusion and the surfaces of the substantially V-shaped groove.

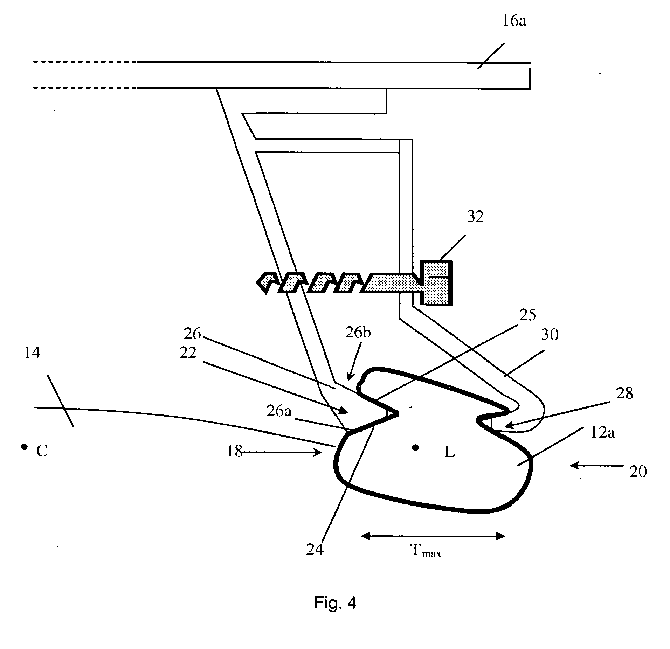

Figure 4 shows how one end of a roof load bar 16a of a roof load bar 16 may be attached to a roof rail 12a according to an embodiment of the invention. The roof rail 12a has a transverse extension that extends between an inner side wall 18 and an outer side wall 20, whereby the inner side wall 18 is located closest to the centre C of the roof 14. It should be noted that the roof rail 12a may be of any shape, it may for example be of substantially circular cross-section whereby the expression "side wall" is intended to mean a part at the side of the substantially circular roof rail 12a. Preferably, the roof rails are arranged in a depression in the area where the roof is joined to the side panels of the vehicle.

The roof rail 12a includes a recessed undercut 22 in the inner side wall 18. The recessed undercut 22 comprises a load-bearing surface 24 that at least partially extends within the boundaries of the maximum transverse extension, Tₘₐₓ, of the part of the roof rail 12a that overlaps the recessed undercut 22 (said boundaries indicated by the ends of the doubleheaded arrow in figure 4). The maximum transverse extension, Tₘₐₓ, may be 3 - 10 cm, whereby the recessed undercut 22 may extend 2-6 cm within the boundaries of the maximum transverse extension, Tₘₐₓ, and, optionally, 2-6 cm outside the boundaries to facilitate mounting of the roof load bar on the roof rail 12a, i.e. to decrease the risk of the paintwork of the vehicle being scratched or the roof of the vehicle being dented as the roof load bar is attached to the roof rails. The height of the roof rail 12a above the roof section on which it is mounted may be 3 - 10 cm. At least substantial part of the weight of the roof load bar 16 that is attached to the roof rail 12a will be borne by that load-bearing surface 24.

In the illustrated embodiment the recessed undercut 22 is constituted by a substantially V-shaped groove that is arranged to receive a corresponding wedge-shaped protrusion 26 that is provided on the foot of the roof load bar 16. A lower downwardly-facing surface 26a of the protrusion is arranged to lie on the load-bearing surface 24 of the roof rail 12a, whereby at least a substantial part of the weight of the roof load bar will be borne by the load-bearing surface 24 of the roof rail 12a when the roof load bar is attached to the roof rail 12a. The protrusion 26 also comprises an upper upwardly-facing locking surface 26b to prevent or minimize movement of the roof load bar 16. The locking surface 26b is arranged to abut against a second surface 25 of the groove, whereby the protrusion 26 will have two surfaces in contact with two surfaces of the substantially V-shaped groove of the roof rail 12a when the roof load bar is attached to the roof rail.

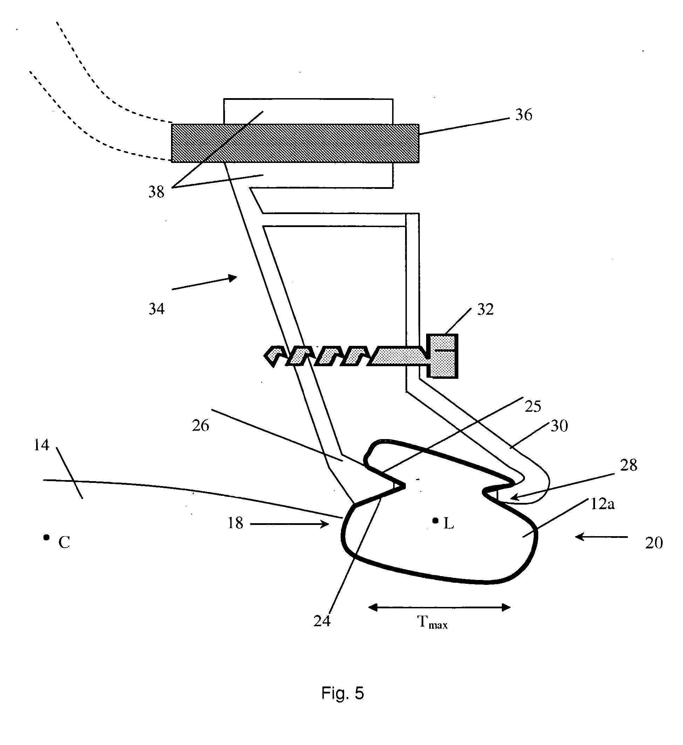

The load-bearing surface 24 of the roof rail 12a is vertically inclined with respect to the horizontal plane (not shown) of the vehicle. The load-bearing surface 24 may be inclined at an angle of 1 - 45° to horizontal plane of the vehicle. The angle between the load-bearing surface 24 and the second surface 25 may be 15-60°. The second surface 25 may be arranged to be substantially parallel to the horizontal plane of the vehicle or may be arranged to be vertically inclined at an angle of 1 - 45° thereto. The load-bearing surface 24 may extend along just part of the length of the roof rail 12a in the longitudinal direction of the car or it may extend along the entire length of the roof rail 12a. The load-bearing surface of the roof rail 12a may extend in a curved/non-linear manner along the length and/or breadth of the roof rail 12a. It should therefore be noted that the cross-section of the roof rail 12 need not necessarily be uniform along the entire length of the roof rail 12a and that the roof rail cross section that is shown in figures 4 and 5 is the cross section at one part of the roof rail 12a only.

The roof rail 12a also comprises receiving means 28 to receive a leg of a clamp 30 that is integrally formed with the end of the roof load bar 16a and that clamps the roof load bar to the roof rail 12a. The load bearing surface 24 is located on the inner side wall 18 of the roof rail 12a and the receiving means 28 are located on the outer side wall 20 opposite the load bearing surface 24 and substantially at the at the same height on the roof rail 12a as the receiving means 28. The clamp 30 comprises tightening means 32, such as a threaded member, for tightening the roof load bar around the roof rail 12a. No special tool is therefore required to attach or detach the roof load bar 16 from the roof rail 12 and the clamp 30 and tightening means 32 are easily accessible.

Figure 5 shows a mounting component 34 for attaching an object 36, such as the handlebar of an inverted bicycle (not shown) to a roof rail 12a. The mounting component 34 comprises means 38, such as lockable jaws that firmly grip the object 36 and thereby attach the component to the object 36. The attachment means 38 may be slidably mounted to facilitate the attachment of an object 36 whose transverse extension is less than the distance between two roof rails. The mounting component 34 comprises a foot having a protrusion 26. A lower downwardly-facing surface 26a of the protrusion 26 is arranged to lie on a load-bearing surface 24 of the roof rail 12a, whereby at least a substantial part of the weight of the object 36 will be borne by the load-bearing surface 24 of the roof rail 12a when the object 36 is attached to the roof rail 12a. An upper upwardly-facing locking surface 26b prevents or minimizes movement of the roof rail 16 when the protrusion 26 has been inserted into the V-shaped groove of the roof rail 12a. The mounting component 34 is clamped to the roof rail 12a by means of a clamp 30. The mounting component 34 may comprise a cover, such as a plastic cover that is designed to improve the vehicle's external appearance and/or aerodynamics, and/or which prevents the component from becoming dirty and consequently facilitates long term use.

Further modifications of the invention within the scope of the claims would be apparent to a skilled person.

## Claims

1. Roof rail (12) for a vehicle (10), which roof rail is arranged to bear at least part of the weight of a roof load bar (16), i.e. part of any framework, stand, grating or container that is secured to the roof of a vehicle on, or in which articles may be placed or to which articles may be attached, whereby the roof rail (12) includes a substantially V-shaped groove that is arranged to receive a corresponding protrusion (26), such as a wedge-shaped protrusion, on a roof load bar (16), **characterized in that** said at least one side (24) of the substantially V-shaped groove or protrusion is inclined at an angle of 1 - 45° to said vehicle's horizontal plane when the roof rail (12) is mounted on a vehicle (10).

2. Roof rail (12) for a vehicle (10), which roof rail is arranged to bear at least part of the weight of a roof load bar (16), **characterized in that** the roof rail (12) includes a substantially V-shaped protrusion, such as a wedge-shaped protrusion, that is arranged to be inserted into a corresponding substantially V-shaped groove on a roof load bar (16).

3. Roof rail (12) according to claim 1, **characterized in that** it has a longitudinal extension L and a transverse extension T that extends between a first side wall (18) and a second side wall (20) and includes a recessed undercut (22) in the first side wall (18), which recessed undercut (22) comprises a load-bearing surface (24) that at least partially extends within the boundaries of the maximum transverse extension, Tₘₐₓ, of the part of the roof rail (12) overlapping said recessed undercut (22) when the roof rail (12) is mounted on a vehicle (10).

4. Roof rail (12) according to any of the preceding claims, **characterized in that** at least one side (24) of the substantially V-shaped groove or protrusion is arranged to be vertically inclined with respect to said vehicle's horizontal plane when the roof rail (12) is mounted on a vehicle (10).

5. Roof rail (12) according to claim 3 or 4, **characterized in that** said first side wall (18) is arranged to be located closest to the centre (C) of the roof (14) of the vehicle (10).

6. Roof rail (12) according to any of the preceding claims, **characterized in that** it comprises receiving means (28) to receive a leg of a clamp (30) that clamps said roof load bar (16) to the roof rail (12).

7. Roof rail (12) according to 6 when dependent on claim 3, **characterized in that** said first side wall (18) is arranged to be located closest to the centre of the roof (14) of the vehicle and **in that** said receiving means (28) are located on the side wall (20) that is to be located furthest from the centre of the roof (14) of the vehicle (10) when the roof rail (12) is mounted on a vehicle (10).

8. Roof rail (12) according to claim 6 when dependent on claim 3, **characterized in that** said first side wall (18) is arranged to be located furthest from the centre of the roof (14) of the vehicle and **in that** said receiving means (28) are located on the side wall (20) that is to be located closest to the centre of the roof (14) of the vehicle (10) when the roof rail (12) is mounted on a vehicle (10).

9. Roof rail (12) according to claim 6, **characterized in that** said load-bearing surface (24) is located substantially at the same height on the roof rail (12) as said receiving means (28).

10. Roof rail (12) according to any of the preceding claims, **characterized in that** said one side (24) of the substantially V-shaped groove or protrusion extends along at least part of the length of the roof rail (12) or preferably along substantially the entire length of the roof rail (12).

11. Roof rail (12) according to any of the preceding claims, **characterized in that** said V-shaped groove or protrusion extends in a curved/non-linear manner along the length and/or breadth of said roof rail (12).

12. Roof rail (12) according to any of the preceding claims, **characterized in that** it is arranged to be located in a channel in the area where the roof of the vehicle is joined to the side panels of the vehicle, when mounted in a vehicle (10).

13. Roof rail (12) according to any of the preceding claims, **characterized in that** said substantially V-shaped groove is rounded, or has a shape which gives rise to at least two contact points or surfaces between the surface(s) of a protrusion (26) and the surfaces of the substantially V-shaped groove when a roof load bar (16) or mounting component (34) is attached to the roof rail (12).

14. Mounting component (34) for attaching a load (16, 36) to a roof rail (12) according to any of the preceding claims **characterized in that** the mounting component (34) comprises a first leg having a distal end comprising a substantially V-shaped protrusion, such as a wedge-shaped protrusion, or a substantially V-shaped groove having a lower downwardly-facing surface (26a) and an upper upwardly-facing locking surface (26b), whereby said protrusion (26) or said groove is adapted to mate with a corresponding substantially V-shaped groove or substantially V-shaped protrusion of said roof rail (12).

15. Mounting component according to claim 14, **characterized in that** it comprises a second leg (30) that is arranged to clamp said component (34) onto said roof rail (12).

16. Mounting component according to claim 15, **characterized in that** it comprises tightening means (32), such as a threaded member, for adjusting the distance between said first and second legs.

17. Mounting component according to any of claims 14-16, **characterized in that** it comprises means (38) to attach the mounting component (34) to an object (36).

18. Roof load bar (16) for a vehicle for use with a roof rail (12) according to any of the preceding claims, **characterized in that** it comprises a mounting component (34) according to any of claims 14-17.

19. Roof load bar (16) according to claim 18, **characterized in that** said mounting component (34) is integrally formed with the roof load bar (16).

20. Vehicle (10), **characterized in that** it comprises a roof rail (12) according to any of claims 1-13, a mounting component (34) according to any of claims 14-17 or a roof load bar according to claim 18 or 19.

21. Vehicle (10) according to claim 20, **characterized in that** said roof rail (12) is mounted on the roof (14) of the vehicle, or is integrally formed with part of the vehicle (10), such as its roof (14) or door frame.

## Patentansprüche

1. Dachreling (12) für ein Fahrzeug (10), die darauf ausgelegt ist, dass sie wenigstens einen Teil der Last eines Dachlastenträgers (16), das heißt einen Teil eines beliebigen Rahmens, Ständers, Rostes oder Behälters, auf oder in dem Gegenstände platziert oder an dem Gegenstände befestigt werden können, trägt, wobei die Dachreling (12) eine im wesentlichen V-förmige Rille umfasst, die darauf ausgelegt ist, einen entsprechenden Vorsprung (26), etwa einen keilförmigen Vorsprung, an einem Dachlastenträger (16) aufzunehmen, **dadurch gekennzeichnet, dass** die wenigstens eine Seite (24) der im wesentlichen V-förmigen Rille oder des Vorsprungs in einem Winkel von 1-45° gegenüber der Horizontalebene des Fahrzeugs geneigt ist, wenn die Dachreling (12) auf einem Fahrzeug (10) befestigt ist.

2. Dachreling (12) für ein Fahrzeug (10), die darauf ausgelegt ist, dass sie wenigstens einen Teil der Last eines Dachlastenträger (16) trägt, **dadurch gekennzeichnet, dass** die Dachreling (12) einen im wesentlichen V-förmigen Vorsprung umfasst, etwa einen keilförmigen Vorsprung, der darauf ausgelegt ist, in eine entsprechende, im wesentlichen V-förmige Rille an dem Dachlastenträger (16) eingesetzt zu werden.

3. Dachreling (12) nach Anspruch 1, **dadurch gekennzeichnet, dass** sie eine Verlängerung L in Längsrichtung und eine Verlängerung T in Querrichtung aufweist, die sich zwischen einer ersten Seitenwand (18) und einer zweiten Seitenwand (20) erstreckt und einen zurückgesetzten Hinterschnitt (22) in der ersten Seitenwand (18) umfasst, wobei dieser zurückgesetzte Hinterschnitt (22) eine lasttragende Oberfläche (24) umfasst, die sich wenigstens teilweise innerhalb der Grenzen der maximalen Verlängerung in Querrichtung Tₘₐₓ des Teils der Dachreling (12) erstreckt, der mit diesem zurückgesetzten Hinterschnitt (22) überlappt, wenn die Dachreling (12) auf einem Fahrzeug (10) montiert ist.

4. Dachreling (12) nach einem der vorhergehenden Ansprüche, **dadurch gekennzeichnet, dass** wenigstens eine Seite (24) der V-förmigen Rille oder des V-förmigen Vorsprungs so ausgelegt ist, dass sie gegenüber der Horizontalebene des Fahrzeugs geneigt ist, wenn die Dachreling (12) auf einem Fahrzeug (10) montiert ist.

5. Dachreling (12) nach Anspruch 3 oder 4, **dadurch gekennzeichnet, dass** die erste Seitenwand (18) so angeordnet ist, dass sie sich am nähesten zur Mitte (C) des Dachs (14) des Fahrzeugs (10) befindet.

6. Dachreling (12) nach einem der vorhergehenden Ansprüche, **dadurch gekennzeichnet, dass** sie Aufnahmemittel (28) zum Aufnehmen eines Beins einer Klammer (30) umfasst, die den Dachlastenträger (16) auf die Dachreling (12) klemmt.

7. Dachreling (12) nach Anspruch 6, wenn er von Anspruch 3 abhängt, **dadurch gekennzeichnet, dass** die erste Seitenwand (18) so angeordnet ist, dass sie sich am nähesten zur Mitte des Dachs (14) des Fahrzeugs (10) befindet, und dass die Aufnahmemittel (28) sich in der Seitenwand (20) befinden, die am weitesten von der Mitte des Dachs (14) des Fahrzeugs (10) entfernt angeordnet sein wird, wenn die Dachreling (12) auf einem Fahrzeug (10) montiert ist.

8. Dachreling (12) nach Anspruch 6, wenn er von Anspruch 3 abhängt, **dadurch gekennzeichnet, dass** die erste Seitenwand (18) so angeordnet ist, dass sie sich am weitesten von der Mitte des Dachs (14) des Fahrzeugs (10) entfernt befindet, und dass die Aufnahmemittel (28) sich in der Seitenwand (20) befinden, die am nähesten zur Mitte des Dachs (14) des Fahrzeugs (10) entfernt angeordnet sein wird, wenn die Dachreling (12) auf einem Fahrzeug (10) montiert ist.

9. Dachreling (12) nach Anspruch 6, **dadurch gekennzeichnet, dass** die lasttragende Fläche (24) im wesentlichen auf der selben Höhe an der Dachreling (12) angeordnet ist wie die Aufnahmemittel (28).

10. Dachreling (12) nach einem der vorhergehenden Ansprüche, **dadurch gekennzeichnet, dass** die eine Seite (24) der Rille oder des Vorsprungs mit im wesentlichen V-Form sich entlang wenigstens eines Teils der Länge der Dachreling (12) oder vorzugsweise entlang der gesamten Länge der Dachreling (12) erstreckt.

11. Dachreling (12) nach einem der vorhergehenden Ansprüche, **dadurch gekennzeichnet, dass** die Rille oder der Vorsprung mit V-Form sich in einer gekrümmten / nicht-geraden Weise entlang der Länge oder der Breite der Dachreling (12) erstreckt.

12. Dachreling (12) nach einem der vorhergehenden Ansprüche, **dadurch gekennzeichnet, dass** sie darauf ausgelegt ist, sich in einem Kanal in dem Bereich zu befinden, in dem das Dach des Fahrzeugs mit den Seitenwänden des Fahrzeugs verbunden ist, wenn sie in einem Fahrzeug montiert (10) ist.

13. Dachreling (12) nach einem der vorhergehenden Ansprüche, **dadurch gekennzeichnet, dass** die im wesentlichen V-förmige Rille abgerundet ist oder eine Form aufweist, die wenigstens zwei Kontaktpunkte oder -oberflächen zwischen der oder den Oberfläche(n) eines Vorsprungs (26) und den Oberflächen der im wesentlichen V-förmigen Rille bewirkt, wenn ein Dachlastenträger (16) oder eine Befestigungskomponente (34) an der Dachreling (12) befestigt ist.

14. Montagekomponente (34) zum Befestigen einer Last (16, 36) an einer Dachreling (12) nach einem der vorhergehenden Ansprüche, **dadurch gekennzeichnet, dass** die Montagekomponente (34) ein erstes Bein mit einem distalen Ende hat, das einen im wesentlichen V-förmigen Vorsprung, etwa einen keilförmigen Vorsprung, oder eine im wesentlichen V-förmige Rille mit einer inneren, nach unten weisenden Oberfläche (26a) und einer oberen, nach oben weisenden Oberfläche (26b) aufweist, wobei der Vorsprung (26) oder die Rille daran angepasst ist, mit einer entsprechenden, im wesentlichen V-förmigen Rille oder einem entsprechenden, im wesentlichen V-förmigen Vorsprung der Dachreling (12) zusammenzuwirken.

15. Montagekomponente nach Anspruch 14, **dadurch gekennzeichnet, dass** sie ein zweites Bein (30) aufweist, dass darauf ausgelegt ist, die Komponente (34) auf die Dachreling (12) zu klemmen.

16. Montagekomponente nach Anspruch 15, **dadurch gekennzeichnet, dass** sie Anziehmittel (32), etwa ein mit einem Gewinde versehenes Bauteil, umfasst, um den Abstand zwischen den ersten und zweiten Beinen einzustellen.

17. Montagekomponente nach einem der Ansprüche 14 bis 16, **dadurch gekennzeichnet, dass** sie Mittel (38) zum Befestigen der Montagekomponente (34) an einem Objekt (36) umfasst.

18. Dachlastenträger (16) für ein Fahrzeug zur Verwendung mit einer Dachreling (12) nach einem der vorhergehenden Ansprüche, **dadurch gekennzeichnet, dass** er eine Montagekomponente (34) nach einem der Ansprüche 14 bis 17 umfasst.

19. Dachlastenträger (16) nach Anspruch 18, **dadurch gekennzeichnet, dass** die Montagekomponente (34) einstückig mit dem Dachlastenträger (16) ausgeformt ist.

20. Fahrzeug (10), **dadurch gekennzeichnet, dass** es eine Dachreling (12) nach einem der Ansprüche 1 bis 13, eine Montagekomponente (34) nach einem der Ansprüche 14 bis 17 oder einen Dachlastenträger nach Anspruch 18 oder 19 umfasst.

21. Fahrzeug (10) nach Anspruch 20, **dadurch gekennzeichnet, dass** die Dachreling (12) auf dem Dach (14) des Fahrzeugs montiert oder einstückig mit einem Teil des Fahrzeugs (10) geformt ist, etwa seinem Dach (14) oder Türrahmen.

## Revendications

1. Rail (12) de toit pour un véhicule (10), ledit rail de toit étant prévu pour porter au moins une partie du poids d'une barre (16) de toit, à savoir partie de toute ossature, support, armature ou conteneur, qui est fixée au toit d'un véhicule sur, ou dans, laquelle des articles peuvent placés ou à laquelle des articles peuvent être assujettis, le rail (12) de toit comprenant une rainure sensiblement en V qui est adaptée pour recevoir une saillie correspondante (26), telle qu'une saillie cunéiforme, sur une barre (16) de toit, ***caractérisé en ce qu'**au* moins un côté (24) de la rainure ou saillie sensiblement en V est incliné selon un angle de 1 à 45° par rapport au plan horizontal dudit véhicule lorsque le rail (12) de toit est monté sur un véhicule (10).

2. Rail (12) de toit pour un véhicule (10), ledit rail de toit étant adapté pour porter au moins une partie du poids d'une barre (16) de toit, ***caractérisé en ce que*** le rail de toit (12) comprend une saillie sensiblement en V, telle qu'une saillie cunéiforme, qui est adaptée pour être insérée dans une rainure sensiblement en V correspondante sur une barre (16) de toit.

3. Rail (12) de toit selon la revendication 1, ***caractérisé en ce qu*'**il possède une extension longitudinale L et une extension transversale T qui s'étend entre une première paroi latérale (18) et une deuxième paroi latérale (20) et comprend un dégagement (22) creusé dans la première paroi latérale (18), ce dégagement creusé (22) comprenant une surface porteuse (24) qui s'étend, au moins partiellement, dans les limites de l'extension transversale maximale, Tₘₐₓ, de la partie du rail (12) de toit recouvrant ledit dégagement creusé (22) lorsque le rail (12) de toit est monté sur un véhicule (10).

4. Rail (12) de toit selon l'une quelconque des revendications précédentes, ***caractérisé en ce qu*'**au moins un côté (24) de la rainure ou de la saillie sensiblement en V est disposé de manière à être incliné verticalement par rapport au plan horizontal dudit véhicule lorsque le rail (12) de toit est monté sur un véhicule (10).

5. Rail (12) de toit selon la revendication 3 ou 4, ***caractérisé en ce que*** ladite première paroi latérale (18) est disposée de manière à être située au plus près du centre (C) du toit (14) du véhicule (10).

6. Rail (12) de toit selon l'une quelconque des revendications précédentes, ***caractérisé en ce qu*'**il comprend des moyens récepteurs (28) destinés à recevoir une branche d'une pince (30) qui assujettit par serrage la barre (16) de toit au rail (12) de toit.

7. Rail (12) de toit selon la revendication 6 lorsqu'elle est dépendante de la revendication 3, ***caractérisé en ce que*** ladite première paroi latérale (18) est disposée pour être située la plus près du centre du toit (14) du véhicule et ***en ce que*** lesdits moyens récepteurs (28) sont situés sur la paroi latérale (20) qui sera située la plus loin du centre du toit (14) du véhicule (10) lorsque le rail (12) de toit est monté sur un véhicule (10).

8. Rail (12) de toit selon la revendication 6 lorsqu'elle est dépendante de la revendication 3, ***caractérisé en ce que*** ladite première paroi latérale (18) est disposée pour être située la plus loin du centre du toit (14) du véhicule et ***en ce que*** lesdits moyens récepteurs (28) sont situés sur la paroi latérale (20) qui sera située la plus près du centre du toit (14) du véhicule (10) lorsque le rail (12) de toit est monté sur un véhicule (10).

9. Rail (12) de toit selon la revendication 6, ***caractérisé en ce que*** ladite surface porteuse (24) est située sensiblement à la même hauteur sur le rail (12) de toit que lesdits moyens récepteurs (28).

10. Rail (12) de toit selon l'une quelconque des revendications précédentes, ***caractérisé en ce que*** ledit un côté (24) de la rainure ou saillie sensiblement en V s'étend sur au moins une partie de la longueur du rail (12) de toit ou, de manière préférée, sensiblement sur toute la longueur du rail (12) de toit.

11. Rail (12) de toit selon l'une quelconque des revendications précédentes, ***caractérisé en ce que*** ladite rainure ou saillie en V s'étend de manière incurvée/non linéaire sur la longueur et/ou la largeur dudit rail (12) de toit.

12. Rail (12) de toit selon l'une quelconque des revendications précédentes, ***caractérisé en ce qu*'**il est adapté pour être situé dans une gorge dans la zone où le toit du véhicule est réuni aux panneaux latéraux du véhicule, lorsqu'il est monté sur un véhicule (10).

13. Rail (12) de toit selon l'une quelconque des revendications précédentes, ***caractérisé en ce que*** ladite rainure en V est arrondie, ou présente une forme qui donne naissance à au moins deux points ou surfaces de contact entre la(les) surface(s) d'une saillie (26) et les surfaces de la rainure sensiblement en V lorsqu'une barre (16) de toit ou un composant de montage (34) est fixé au rail (12) du toit.

14. Composant de montage (34) pour la fixation d'une charge (16, 36) sur un rail (12) de toit selon l'une quelconque des revendications précédentes, ***caractérisé en ce que*** le composant de montage (34) comprend une première branche ayant une extrémité distale comprenant une saillie sensiblement en V, telle qu'une saillie cunéiforme, ou une rainure sensiblement en V ayant une surface inférieure (26a) orientée vers le bas et une surface supérieure (26b) de blocage orientée vers le haut, ladite saillie (26) ou ladite rainure étant apte à épouser une rainure sensiblement en V ou une saillie sensiblement en V correspondantes dudit rail (12) de toit.

15. Composant de montage selon la revendication 14, ***caractérisé en ce qu*'**il comprend une deuxième branche (30) qui est prévue pour assujettir par serrage ledit composant (34) sur ledit rail (12) de toit.

16. Composant de montage selon la revendication 15, ***caractérisé en ce qu'***il comprend des moyens de serrage (32), tels qu'un élément fileté, pour régler la distance entre lesdites premières et deuxièmes branches.

17. Composant de montage selon l'une quelconque des revendications 14 à 16, ***caractérisé en ce qu*'**il comprend des moyens (38) pour fixer le composant de montage (34) à un objet (36).

18. Barre (16) de toit pour un véhicule, destinée à une utilisation avec un rail (12) de toit selon l'une quelconque des revendications précédentes, ***caractérisée en ce qu*'**elle comprend un composant de montage (34) selon l'une quelconque des revendications 14 à 17.

19. Barre (16) de toit selon la revendication 18, ***caractérisée en ce que*** ledit composant de montage (34) est formé de manière solidaire avec la barre (16) de toit.

20. Véhicule (10), ***caractérisé en ce qu*'**il comprend un rail (12) de toit selon l'une quelconque des revendications 1 à 13, un composant de montage (34) selon l'une quelconque des revendications 14 à 17, ou une barre de toit selon la revendication 18 ou 19.

21. Véhicule (10) selon la revendication 20, ***caractérisé en ce que*** ledit rail (12) de toit est monté sur le toit (14) du véhicule, ou est formé de manière solidaire avec une partie du véhicule (10), telle que son toit (14) ou un encadrement de portière.
